# EUROPEAN PATENT SPECIFICATION

(11) **EP 1 844 653 B1**
(45) Date of publication and mention of the grant of the patent: **26.07.2017**
(21) Application number: 06024299.7
(22) Date of filing: 23.11.2006
(51) Int. Cl.: A01N 25/28, A01N 25/30, A01N 57/16, A01N 47/36, A01N 43/40, A01P 7/04, A01P 13/02

(54) **Novel agrochemical formulations containing microcapsules**
Neuartige agrochemische Formulierungen mit Mikrokapseln
Nouvelles formulations agrochimiques contenant des microcapsules

(30) Priority: 30.03.2006 EP 06006748
(43) Date of publication of application: 17.10.2007
(73) Proprietor: GAT Microencapsulation GmbH, 2490 Ebenfurth (AT)
(72) Inventor: Casaña Giner, Victor, 2490, Ebenfurth (AT); Gimeno Sierra, Miguel, 2490, Ebenfurth (AT); Gimeno Sierra, Barbara, 2490, Ebenfurth (AT)
(74) Representative: Soler Lerma, Santiago

(56) References cited:
- WO-A-02/49432
- US-A- 5 460 817
- DATABASE WPI Week 199521 Derwent Publications Ltd., London, GB; AN 1995-158855 XP002431168 & JP 07 082109 A (KURITA WATER IND LTD) 28 March 1995 (1995-03-28)
- DATABASE CA [Online] CHEMICAL ABSTRACTS SERVICE, COLUMBUS, OHIO, US; HERBERT, RICHARD M.: "Novel polymeric dispersants for aqueous suspension concentrate formulations" XP002431165 retrieved from STN Database accession no. 2002:968413 & ASTM SPECIAL TECHNICAL PUBLICATION , STP 1430(PESTICIDE FORMULATIONS AND DELIVERY SYSTEMS), 15-23 CODEN: ASTTA8; ISSN: 0066-0558, 2003,
- DATABASE WPI Week 200453 Derwent Publications Ltd., London, GB; AN 2004-546815 XP002431169 & JP 2004 196741 A (TOPPAN FORMS CO LTD) 15 July 2004 (2004-07-15)

## Description

### State of the Art:

It is known that microencapsulation is a technique that offers a number of advantages in front of other formulation techniques in the field of Agrochemistry. Modern agricultural practice requires controlling the application of biological active components to the target. This allows: to increase compounds stability over extended periods of time, to reduce environmental hazards, to decrease acute toxicity, and to deal with incompatibility between ingredients. Fluids are used as functional inerts in high technology formulations, e.g. allowing encapsulation of solid active ingredients and adjusting the diffusion rate of the active substance.

Several basic processes have also been disclosed, that can be divided into coacervation interfacial polymerization and in-situ polymerization. Most commercially available CS (microcapsule suspension) formulations are manufactured by interfacial polymerisation, e.g.: Chlorpyrifos CS, Lambdacyhalothrin CS, Fluorochloridone CS, and Methylparathion CS. When dryied, they may form water dispersable granules containing microcapsules. A typical method of CS manufacture by interfacial polymerisation is to dissolve the active ingredient, monomers or prepolymers in a fluid (oil phase). The latter is dispersed into the water phase, which contains emulsifiers, protective colloids (and eventually additional prepolymers). The capsule wall around the oil droplet is formed by polymerisation at the interface of water and oil in the presence of a catalyst or by heat.

Many wall-forming materials are available for the encapsulation of liquid or solid active ingredients. The release rate of the latter can be adjusted by selecting the optimum
- wall materials,
- dimensions of the microcapsules (diameter and wall thickness),
- porosity of the wall (degree of cross-linking),
- protective colloid(s),
- fluids (in oil or in water).

Fluids (solvents), in addition to their ingredients dissolving role, are influencing the emulsion quality by maintaining a low viscosity during the emulsification and polymerization steps. WO 02/49432 A1 discloses the preparation of a microcapsule suspension (CS) containing the herbicide bromoxynil-octanoate. The composition comprises an aqueous phase and an oil phase, wherein no glycoluril derivatives are considered as wall forming materials. No prior art leads to an obvious solution for the problem addressed in this invention (basic unitary process for different formulation types and mixtures of active ingredients).

### Description

One of the most difficult tasks to achieve is to get capsule suspensions or water dispersable granules (WG) formed with micocapsules in common processs for herbicides, fungicides and insecticides, and their mixtures -both of activity and different active ingredients- in such a way that this process facilitates the industrial production of such agrochemicals because of the use of the same technology and the same process, and, basically the same coformulants. We have been able, for the first time ever to find a common microencapsulation and spray dry process not only for encapsulation of different types of molecules but also incompatible molecules that up o now, no Company has been able to apply in an Industrial way. Therefore the objet of this invention is to facilitate the production of agrochemical formulations in the form of capsule suspension (CS) and/or ZC and/or WG in a unified production process. Also is object of the invention to protect the microcapsules, CS, ZC and WG formulations of active ingredients never encapsulated before in these type of formulations and also the process characterized in that selected coformulants, wall forming materials are both able to reach a CS formulation and, at the desire of the producer, to proceed further without essential changes to spray dry this CS to form a WG of microcapsules. Further, our novel process allows combinations not possible to market until now, as is the case of mixtures of fluroxypyr with sulfonylureas (this was not possible before due to chemical incompatibility and also due to the proper selection of coformulants that allow the stability of both type of ingredients, and a functionally good formulation with excellent dispersibility poperties.

For example, according to prior art we have tried hard to make WG of microencapsulated fluroxypyr using the known methods of making WG of chlorpyryfos (both processes of Beestman and Muliqueen -Monsanto and Dow-), with unsuccessful results. In both cases we obtain a wet sieving residue of more than 10%, of which 50% corresponds to crystallized fluroxypyr outside of the micocapsules This is easily understood insofar, the formulation technology is a very complex chemistry field, where many parameters influence at the same time: compatibility of active ingredients with the wall forming materials, surfactants, coformulants, temperature of granulation, etc.

At the view of the state of the art, it is not obvious how to microencapsulate fluroxypyr, a fact that is confirmed by the non-existence of any microencapsulated fluroxypyr available in the marked anywhere in the world. The selection of the wall forming materials, the conditions of the reaction and, extremely important, the coformulants can only be achieved after a long period of extensive research involving novel ideas not available before. Also, it is described in an enabling disclosure for the first time how to microencapsulate fluroxypyr, add a sulfonylurea and spray dry to obtain a novel combination of fluroxypyr and sulfonylureas (also chlorpyrifos and sulfonylureas). For incorporation of sulfonylureas plus other actives microencapsulated, accoding the present invention they are milled to form a suspension concentrate (SC), and then the CS suspension is added to the SC. Optionally the SC contain other sulfonylurea-compatible agrochemicals and optionally the microcapsules contain a mixture of several actives compatible in between them. One of the novelty aspects of this invention is the ability to have an "oil phase" (inside microcapsules) where the only requisite is that in such phase the oil soluble materials are compatible, and a "water phase" where the same requisite applies, but it is not necessary that the oil soluble actives and the water soluble actives are compatible in between them.

In fact, the present invention has its more powerful sense when the active ingredients in and out- of the microcapsules- are incompatible in the broad sense, namely, that the activity is reduced because any reason including chemical reaction in between incompatible materials, adsorption, crystallization induction, etc.

Chlorpyrifos microcapsules in the form of water dispersable granules are known from a number of patents of Dow and Monsanto. However, the processes so far disclosed differ in the process of the present invention. We have invented new ingredient lists where the functionality and role of essential coformulants that unexpected properties and as well the use of a water-insoluble catalyst in the form of an emulsion to control the speed and degree of polymerization of the microcapsule's wall, and the improved dispersibility and suspensibility of the present formulation when compared to the prior art. Also, the use of our wall foming materials leads to a taylor made release rate, easier to predict and control than when conventional microencapsulating techniques are used.

Fluroxypyr on the other side has never been described in microencapsulated form, at least in a enable disclosure, and lesser having the extraordinary formulation poperties described herein regarding also particle size, and long term stability, and when in WG (CS) formulation, the high dispersibility and suspensibility properties.

### Detailed description of the invention.

For the purpose of the invention, the preferred materials are those having a low melting point as one of the materials to microencapsulate, at least one of the actives (if chosen to be more than one) to be inside the microcapsules. Outside of the microcapsules, optionally it is used a sulfonylurea or any suitable agrochemical. The invention is better understood with examples.

### Example 1

A typical composition to microencapsulate would be, for fluroxypyr, as follows (in w/w %):

| | |
|---|---|
| Fluroxypyr ester (methyl, 2-butoxymethylethyl, etc.) | 50.0 |
| PAPI/Desmodur 44V20L | 3.50 |
| PowderLink 1174(40% in g-Butyrolactone) | 1.25 |
| Water Phase | |
| Synperonic PE/64 | 0.60 |
| Metasperse 500L | 10.00 |
| Citric Acid | 0.14 |
| catalyst(Triethyl amine 20% emulsion) | 0.25 |
| Water | 34.26 |

Both water and oil phases are warmed up to about 70-80 °C, in order to have the active ingredient in liquid form (in this case fluroxypyr, in other cases, this temperature may be higher or lower according the melting point). Although inclusion of solid actives or coformulants is possible we do not enter into detail for the sake of simplicity.

Up to this step we can find enormous differences with respect to prior art. Some processes, instead of using the warming step, use the dissolution with Solvesso (patent documents of Monsanto on Chlorpyrifos, for example). This has the disadvantage that at the end of the spraying dry step (if this "single process technique is used"), the solvesso is partially evaporated due to the hot conditions of spray drying, leading to an increased unencapsulated material and increase of crystals outside of the microcapsules. Other processes, as those of Dow for Chlopyrifos, have the inconvenience that the surfactant/dispersant systems reach the cloud point and then those documents do not enable the use of a single unique process that allows to stop at the time of the CS formation, or proceed further with an spray-dry to create WG or even to poduce a mixture formulation of suspension concentrate+capsule suspension (ZC formulation).

To be able to have a "standard processmulti-purpose" is needed that the surfactant system (including dispersants and wettings) has two properties: 1) be able to be stable at a wide range of pHs, to be able to be used for encapsulation of different actives and 2) have a cloud point over the melting point of the desired agrochemical to encapsulate, concomitantly, preventing phase inversion during the process.

We have surpressively found that indeed exist such surfactant systems, in particular those based in the use of th Metasperse 500L or Metasperse 550S type of dispersant and a Symperonic PE/64 surfactant-wetting agent.

Regarding the Metasperse 500 series, we have not found any other better dispersant for the purposes of both being able to have a good CS suspension, to spray dry it and have a good WG formulation or to mix with an SC to have a good ZC formulation. Further we have found amazingly that the properties of Metasperse 500L in order to prevent Ostwald ripening forces and agglomeration processes is valid for all formulations of the type CS, ZC and WG (of capsules), making our desired target of an "unified" process for different formulation times a reality. Referring to chemical properties rather than to brand names (Metasperse 500L, 550S), the type of compounds are styrene acrylic polymers, but more preferentially, and with evident better performance anionically substituted styrene acrylic polymers, being this anionic substituents being chosen from a wide range, preferably, but not necessarily from sulphonates and phosphates.

Regarding the process, both mentioned phases are mixed (emulsionated) at a suitable speed of an ultraturrax type mixer (e.g., 2000 rpm) for a short time (e.g., 10 minutes), adding the catalizator short after the emulsification step begins (e.g., 1 to 3 minutes) till obtaining a particle size of about 1 to 30µm, being obvious that other sizes may be selected. Then a cooking process is initiated, for some hours (typically 2 h), and the capsules are hardened. A cooling and filtering step follows to obain a agriculturally suitable CS formulation of fluroxypyr (or of any other agrochemical that is solid at room temperature and with a low melting point -below about 110°C, as far as the surfactant does not reach the cloud point).

According to the invention, we are able to proceed with this "ready to use" formulation to form a ZC formulation. This can be easily achieved by providing a customary SC of a suitable agrochemical, particulary important a sulfonylurea or mixtures thereof, for example metsulfuron-methyl. An example of the composition of the metsulfuron-methy concentrate is:

| **Ingredient (metsulfuron conc.)** | |
|---|---|
| | |
| **water** | 34,02 |
| **Metasperse 500L** | 26,74 |
| **Geropon DOS/PG** | 5,40 |
| **Dispersing Agent LFH** | 0,49 |
| **Antifoam** | 0,26 |
| **Metsulfuron techn.** | 33,09 |
| **SUM** | **100,00** |

Both the fluroxypyr CS and the methsulfuron-methyl SC may be mixed in the desired proportion to obtain the desired final formulation of active ingredients, having the metsulfuron-methyl SC the necessary coformulants for a perfect formulation stability.

To be more explicit, a ZC formulation Fluroxypyr+Metsulfuron can be done accoding the process described with the following ingredients:

| | |
|---|---|
| **Dispersing Agent LFH** | 0,30 |
| **Antifoam** | 0,16 |
| **Urea** | 18,40 |
| **Metsulfuron conc. (∼31%)** | 1,97 |
| **water** | 20,93 |
| **SUM** | **61,53** |
| | |
| **TOTAL** | **100,00** |

| | |
|---|---|
| **Final: 38,47 wt% Fluroxypyr CC 61,53 wt% Adjustmend mix** | |

If the desire is to make a WG from the CS obtained above (fluroxypyr CS, optionally other actives replacing/added to the oil phase) or from the ZC mentioned just above these lines, then the mixture must be adjusted for the purposes of spray drying. We have invented a surpressively easy solution to prepare the CS or the ZC for the spray drying step. The content of the styrene acrylic polymer varies in between 1 to 45% in w/w in the final formulation.

This consists on the addition to the water phase, in which the microcapsules are suspended of a further quantity of Metasperse 500 Series (or any similar dispersant type of the same chemical class (modified styrene acrylic polymer or anionically modified styrene acrylic polymer, more preferably of the second class) in an amount of 2 to 20 % in w/w related to total weight of liquid to spray and from 0.1 to 15 % of any sulfosuccynate available in catalogs for the agrochemical industry (e.g., Clariant, Uniquema, Cognis, etc) or similar type of chemical.

Then the product is spray dryed at a temperature of the product slightly below the melting point (e.g., for Chlopyrifos 35°C, for the example above 40-45 °C) and a temperature of the air of 70-75 %. Normally the WG consisting of microcapsules is deemed to be enough dried when the humidity is below 0.5%.

Therefore, we have shown how following a common process a fluroxypyr CS may be converted into a ZC without any particular changes directed in the process of making the CS, and the same to end up with a WG of fluroxypyr and metsulfuron. One of the main targets of the combination of microencapsulated material mixed with unencapsulated materials is to achieve a longer stability of the most labile compound.

A test on the storage stability was performed with the following results:

**Content of active ingredient [wt-%, g/kg] of water dispersible granules of Fluroxypyr 250 g/kg + Metsulfuron 10 g/kg WG - Generic Name: FXY+MET 26 WG**

| | | | | | |
|---|---|---|---|---|---|
| **GAT Registration ID Number** | **divided in five portions** | | | | |
| ***Test Item ID Number*** ¹⁾ | **FXY-MSF_0604** | **GLASS¹⁾ 54 ± 2 °C,** after storage | **PLASTIC²⁾ 54 ± 2 °C,** after storage | **GLASS³⁾ 0 ± 2 °C,** after storage | **PLASTIC⁴⁾ 0 ± 2 °C,** after storage |
| | | | | | |
| **Content of A.I.** | | | | | |
| **Fluroxypyr** | | | | | |
| **wt-%** | **39.37** | **38.57** | **38.35** | **38.65** | **38.51** |
| | | | | | |
| **Metsulfuron** | | | | | |
| **wt-%** | **1.18** | **1.18** | **1.18** | **1.18** | **1.19** |
| | | | | | |

Comparison of stability of fluroxypyr and metsulfuron-methyl when a WG granulation is made according to US 5,688,743 (Dow) and the encapsulation step has been omitted and replaced by a joint milling of the corresponding amount of fluroxypyr and metsulfuron-methyl.:

| Content of active ingredient [wt-%, g/kg] of water dispersible granules of Fluroxypyr 250 g/kg + Metsulfuron 10 g/kg WG - WHITOUT MICROENCAPSULATION OF FLUROXYPYR | | | | | |
|---|---|---|---|---|---|
| **GAT Registration ID Number** | **divided in five portions** | | | | |
| ***Test Item ID Number*** ¹⁾ | **FXY-MSF_060/** | **GLASS¹⁾ 54 ± 2 °C,** after storage | **PLASTIC²⁾ 54 ± 2 °C,** after storage | **GLASS³⁾ 0 ± 2 °C,** after storage | **PLASTIC⁴⁾ 0 ± 2 °C,** after storage |
| **Content of A.I.** | | | | | |
| **Fluroxypyr** | | | | | |
| **wt-%** | **39.41** | **28.02** | **16.05** | **34.44** | **36.34** |
| | | | | | |
| **Metsulfuron** | | | | | |
| **wt-%** | **1.16** | **0.21** | **0.24** | **0.35** | **0.39** |

As we can see from the table above, the incompatibility of metsulfuron-methyl is obvious, leading to an unusable water dispersable granule because of loss of active ingredient. Fluroxypyr, to certain extent, also degradates: the fact that in cold fluroxypyr is reasonably well conserved means that in a non-microencapsulated Fluoroxypyr WDG (with a sulfonylurea) the reaction of degradation takes place on the finished product, and not during the production of the WG.

**Results on physicochemical properties of water dispersible granules of Fluroxypyr 250 g/kg + Metsulfuron 10 g/kg WG - Generic Name: FXY+MET 26 WG**

| **GAT Registration ID Number** | **divided in five portions** | | | | |
|---|---|---|---|---|---|
| ***Test Item ID Number*** ¹⁾ | **FXY-MSF_0604** | **GLASS¹⁾ 54 ± 2 °C,** after storage | **PLASTIC²⁾ 54 ± 2 °C,** after storage | **GLASS³⁾ 0 ± 2 °C,** after storage | **PLASTIC⁴⁾ 0 ± 2 °C,** after storage |
| **pH value** _{(20°C)} | **6.6** | **6.8** | **6.8** | **6.8** | **6.8** |
| | | | | | |
| **Tap density** ³⁾ _{(20 °C)} [g/cm³] | **0.590** | **0.577** | **0.585** | **0.566** | **0.592** |
| | | | | | |
| **Particle size** [µm] | | | | | |
| D (v, 0.5) | **8.18** | **8.18** | **7.82** | **7.85** | **8.08** |
| D (v, 0.9) | **20.56** | **20.44** | **20.15** | **21.27** | **21.52** |
| | | | | | |
| **Suspensibility** [wt-%] | **82** | **84** | **83** | **80** | **81** |
| | | | | | |
| **Dispersibility** [wt-%] | **94** | **99** | **99** | **97** | **97** |
| | | | | | |
| **Wettability** [sec] | **0** | **0** | **0** | **0** | **0** |
| | | | | | |
| **Persistent foam** [mL] | **0** | **0** | **0** | **0** | **0** |
| | | | | | |

One of the most surpresive aspects of the invention is the inclusion as a best choice dispersant the anionically modified styrene acrylic polymers. This class of surfactants shows to:
1- Provide a very good dispersion of the microcapsules
2- Provide a perfect compatibility with an SC, where the same polymer can be used as a dispersant.
3- Provide an exceptional granule's coformulant that improves the dispersibility over WG of microcapules prouced with state of the art techniques.

To illustrate this, we show how the invention can be used for the production of microencapsulated chlorpyrifos, adding to the CS formulation (ready to use in the field as such) some "helpers" (included in the second adjustment mixture) for the granulating step and obtaining very high dispersible granules with low wet sieven residue, and very important almost unnapreciable unencapsulated material.

### Example 2

The formulation of Chlorpyrifos 750 g/kg WG (CS) consists of two components, a capsule suspension and an adjustment mixture. The capsule suspension works as base for different formulations depending on the adjustment, like 240 g/L CS, 400 g/L CS and 750 g/kg WG. The target is to achieve both a "ready to use" CS formulation, and for the costumers interested in having a WG (CS), to be able to use the same produced CS and proceed to spray dry. For development of the given formula of Chlorpyrifos 75 WG (CS) two hundred capsule suspensions have been done during the development, being adjusted with hundred eighty different adjustment mixtures. Only those formulations containing styrene acrilyc polymers, and particulary phosphated and/or sulphated substituted styrene acrylic polymers are improving state of the art formulations of Chlorpyrifos 700 g/kg. The formulation with best results is as follows:

**Recipe for Chlorpyrifos capsule supension**

| **CPP01CS202** | Amount in weight percent [wt-%] | |
|---|---|---|
| **Oil Phase** | 100 | **55.75** |
| Chlorpyrifos technical (calculated as 99%) | 91.48 (90.57) | 51.00 (50.49) |
| Chlorpyrifos impurities (calculated as 1%) | (0.91) | (0.51) |
| Desmodur 44 V 20 L / PAPI | 6.28 | 3.5 |
| Crosslinker | 2.24 | 1.25 |
| **Water Phase** | 100 | **44.00** |
| Water | 77.14 | 33.94 |
| Symperonic PE/L64 | 1.36 | 0.60 |
| Metasperse 500 L | 21.20 | 9.33 |
| Citric acid | 0.30 | 0.13 |
| **Catalyst** | | **0.25** |

The catalyst may be for procedural reasons to be dibutyltinlaurate, but the best control of the reaction is achieved by an emulsified catalyst (not soluble in water, but emulsified in it, a concept completely new). Some details to handle this unique type of catalyst in the microencapsulation field is that The components of the Catalyst are mixed together using an ultrasonic bath or Ultrathurrax to homogenize in no special order at room temperature. Care has to be taken that the catalyst will separate within 24 hours and therefore should be homogenized prior to addition.of the catalyst was prepared by mixing the components for 100 mL (water, Symperonic PE/L64, Triethylamine) by simple shaking in a bottle. In fact the catalyst in chemical sense is the triethylamine, but the real "catalyst" in the practice is this emulsion (comparable to platinum alone and platinum in carbon support).

**Recipe for the Catalyst in Chlorpyrifos capsule supension**

| **Catalyst** | Amount in weight percent [wt-%] |
|---|---|
| Triethylamine | 20 |
| Synperonic PE/L64 | 1 |
| Water | 79 |

**Recipe for Chlorpyrifos ready to use capsule suspension**

| **CPP01CS202GD** | Amount in weight percent [wt-%] | |
|---|---|---|
| **Capsule suspension** | 100 | **83.07** |
| Chlorpyrifos technical (calculated as 99%) | 51.00 (50.49) | 42.36 (41.94) |
| Chlorpyrifos impurities (calculated as 1%) | (0.51) | (0.42) |
| Desmodur 44 V 20 L / PAPI | 3.5 | 2.91 |
| Crosslinker (Tetraethoxyethyl glcoluril in 40% cyclohexanone) | 1.25 | 1.04 |
| Water | 33.94 | 28.19 |
| Symperonic PE/L64 | 0.60 | 0.50 |
| Metasperse 500 L | 9.33 | 7.75 |
| Citric acid | 0.13 | 0.11 |
| Catalyst | 0.25 | 0.21 |
| **Adjustment mixture GD** | 100 | **16.93** |
| Metasperse 500L | 76.60 | 12.97 |
| Antifoam TEGO MR2138 | 1.00 | 0.17 |
| Dispersing agent LFH | 1.80 | 0.30 |
| Geropon DOS/PG | 20.60 | 3.49 |

Further is we want to spray dry this CS formulation of chlorpyrifos, we proceed as follows in the spray drier:

**Typical Parameters for spray drying of Chlorpyrifos adjusted capsule suspension CPP01CS202GD**

| **Aeromatic MP1** | **initial Parameters** | |
|---|---|---|
| Nozzle Diameter | 2.0 mm | |
| Air pressure | set to 2.0 bar | |
| Temperature (incoming air) | set to 60°C | |
| Vent level, air in | 50 % | |
| Vent level, air out | 55 % | |
| Feed rate | 15 g/min | |

| Parameter | Range | typical Value |
|---|---|---|
| Temperature (incoming Air) | 41°C - 52°C | 46°C |
| Temperature (Product) | 38°C - 44°C | 40°C |
| Temperature (leaving Air) | 32°C - 38°C | 35°C |
| Pump Feed | 15 g/min to 94 g/min | 40 g/min |

The resulting product has the following specifications:

**Table 1: Specifications for Chlorpyrifos 750 g/kg WG**

| Parameter | Unit | Method | Specification |
|---|---|---|---|
| Chlorpyrifos | wt-% | GAT-0906-CPS01-GC | 72.50 - 77.50 |
| Clorpyrifos | g/kg | GAT-0906-CPS01-GC | 725.0 - 775.0 |
| Appearance | | Visual | White to slightly brown granules |
| Water content | g/kg | CIPAC MT 30.5 | <15 |
| Particle size D(v,0.5) | µm | CIPAC MT 187 | 2.0 - 4.0 |
| Particle size D(v,0.9) | µm | CIPAC MT 187 | < 50 |
| Particle size D(v,0.5) | µm | CIPAC MT 187, 2 min sonification | 2.0 - 4.0 |
| Particle size D(v,0.9) | µm | CIPAC MT 187, 2 min sonification | <15 |
| Granule size | mm | CIPAC MT 59 | 0.2 < x < 1.0 |
| pH value | | CIPAC MT 75.3 | 6.0 - 7.0 |
| Persistent foam | mL | CIPAC MT 47.1 | ≤ 3 |
| Suspensibility | % | CIPAC MT 184 | > 90 |
| Dispersibility | % | CIPAC MT 174 | > 95 |
| Wettability | sec | CIPAC MT 53.3.1 | < 30 |
| Wet Sieving | % | CIPAC MT 59 | < 0.1 |

The extraordinary values on suspensibility and dispersibility are well ahead of the current state of the art in chlorpyrifos WG at high load (60-80% g/kg). The inventors have only achieved this result thanks to the unexpected properties of the (optionally anionically substituted) styrene acrylic polymers.

Important to say, any other formulation not according to the invention, which does not contain styrene acrylic polymers as in the formulation yielded a product below FAO specifications, in particular regarding suspensibility (<50%), dispersibility (<10%) and wet sieving residue(>5%).

The examples show how chlorpyrifos, fluroxypyr and metsulfuron-methyl are greatly benefited from the present invention. It is clear that any sulfonylurea would be protected as well when combined with fluroxypyr or any other agrochemical with similar characteristics regarding melting point.

We have also performed the microencapsulation as above described with diflufenican in combination with nicosulfuron, with the same good results.

Other sulfonylureas that may be used in the present invention are:
Amidosulfuron, azimsulfuron, bensulfuron, chlorimuron, chlorsulfuron, cinosulfuron, cyclosulfamuron, ethametsulfuon, ethoxysulfuron, flazasulfuron, flupyrsulfuon, foramsulfuron, halosulfuron, imazosulfuron, iodosulfuron, mesosulfuron, nicosulfuron, oxasulfuron, primisulfuron, prosulfuron, pyrazosulfuron rimsulfuron, sulfometuron, sulfosulfuron, thifensulfuron, triasulfuron, tribenuron, trifloxysulfurori, trflusulfuron, tritosulfuron; and all their common derivatives such methyl, meptyl, etc. esters.

Other similar agrochemicals (or their mixtures with or without fluroxypyr and/or chlorpyrifos) as fluroxypyr (for combination with sulfonylurea or not) are selected from the group of all agrochemicals that are solid at room temperature and with a melting point at atmospheric pressure lower than 110 °C.

Particulary interesant all triazole fungicides, in particular propiconazole, tebuconazole,.

The sulfonylureas, for the purpose of protection against degradation may be well encapsulated according process using anionic substituted acrylic styrene polymers as dispersing agents, and optionally, encapsulated in such way that the encapsulation reaction takes place thanks to an emulsified catalyst (a polyamine).

The selection of coformulants for the creation of the CS, SC, ZC and WG formulations are in no way limited to the compounds mentioned in the examples: what is important is that the chemical class of chemicals remains as closer as possible. For example isocyanates as wall forming materials, polyamines or alkyltin fatty esthers as catalysts, sulfosuccinate addition before spray drying, etc. The wall forming materials are composed of mixtures of aromatic isocyanate(s) and glicoluril derivatives having the four hydroxylgroups substituting the four nitrogen atoms of the five membered cycle replaced by a alkyloxyalkylen group, where alkylene has the meaning of methylen, ethylen, isopropylen, and alkyl the meaning methyl, ethyl, isopropyl.

## Claims

1. Agrochemical formulation containing microcapsules **characterized in that** the active ingredient(s) are selected alternatively from the groups:
(i) Chlorpyrifos being inside the microcapsules,
or
(ii) Fluroxypyr being inside the microcapsules,
or
(iii) a combination of: (a) fluroxypyr and (b) at least one sulfonylurea, wherein
(a) is inside the microcapsules and (b) is(are) outside the microcapsules;
or
(iv) a combination of (b) at least one sulfonylurea and (c) one agrochemical compound whose melting point is below 110 °C and it is solid at room temperature, wherein (c) is inside the microcapsules and (b) is(are) outside the microcapsules;
and the agrochemical formulation contains a styrene acrylic polymer at 1-45 % in weight % with respect to the total weight of the formulation;
and the microcapsules are made by the reaction of at least one aromatic isocyanate and a glycoluril derivative having the four hydrogens of the four nitrogen atoms substituted by a alkyloxyalkylen group, wherein alkylene has the meaning of methylen, ethylene, isopropylen, and alkyl the meaning methyl, methyl, isopropyl;
and the microcapsules have a particle size of 1 to 30 µm.

2. Agrochemical formulation according to claim 1 **characterized in that** the styrene acrylic copolymer is anionically substituted.

3. Spray dried agrochemical formulation according to claims 1 or 2 **characterized in that** the aqueous suspension spray dried contained 2-20 % in weight % of the styrene acrylic polymer of claims 1 or 2 and additionally contained 0,1-15 % in weight % of a sulfosuccinate.

4. Agrochemical formulation according to claims 1 or 2 **characterized in that** it is of the type water dispersable granules and the microcapsules enclose fluroxypyr.

5. Agrochemical formulation according to claims 1 or 2 **characterized in that** it is of the type water dispersable granules and the microcapsules enclose chlorpyrifos.

6. Agrochemical formulation according to claim 1 or 2 **characterized in that** it is of the type water dispersable granules and the active ingredient inside the microcapsule is fluroxypyr and at least a sulfonylurea is outside of the microcapsules.

7. Agrochemical formulation according to claim 1 or 2 **characterized in that** it is of the type capsule suspension and the microcapsules enclose fluroxypyr.

8. Agrochemical formulation according anyone claims 1 to 9 **characterized in that** the the final formulation contains from 1 to 45% of an anionic styrene acrylic polymer, and in the case of being a water dispersible concentrate, it contains a sulfosuccinate in a concentration of 0.1 to 15% when calculated in the wet weight of the formulation before the spray drying step.

9. A process of manufacture of an agrochemical water dispersable granules formulation containing fluroxypyr according claim 1 **characterized in that** the steps are:
a) providing an oil phase at about 75° C containing the wall forming material of claims 1 or 2, the catalyst and the active ingredient;
b) providing a water phase at about 75 °C containing an anionic substituted styrene acrylic polymer and an oil soluble emulsifier;
c) mixing both phases, adding shortly afterwards a dialkyl tin laurathe catalyst and emulsifying with high shear stress;
d) letting the microcapsules harden at the same temperature for about 2 hours;
f) adding an anionic substituted styrene acrylic polymer and a sulfosuccinate;
g) spray drying the mixture f) at a temperature of the product below the melting point of below the melting point of the active ingredient fluroxypyr.

## Patentansprüche

1. Agrochemische Formulierung, die Mikrokapseln enthält, **dadurch gekennzeichnet, dass** die aktiven Bestandteil(e) alternativ aus den folgenden Gruppen ausgewählt sind:
(i) Chlorpyrifos, das sich innerhalb der Mikrokapseln befindet,
oder
(ii) Fluroxypyr, das sich innerhalb der Mikrokapseln befindet,
oder
(iii) einer Kombination von: (a) Fluroxypyr und (b) mindestens einem Sulfonylharnstoff, wobei sich (a) innerhalb der Mikrokapseln befindet, und (b) sich außerhalb der Mikrokapseln befindet (befinden);
oder
(iv) einer Kombination von (b) mindestens einem Sulfonylharnstoff und (c) einer agrochemischen Verbindung, deren Schmelzpunkt unter 110 °C liegt und die bei Raumtemperatur fest ist, wobei sich (c) innerhalb der Mikrokapseln befindet, und (b) sich außerhalb der Mikrokapseln befindet (befinden);
und die agrochemische Formulierung ein Styrol-Acryl-Polymer bei 1-45 Gew.-% bezogen auf das Gesamtgewicht der Formulierung enthält;
und die Mikrokapseln durch die Reaktion mindestens eines aromatischen Isocyanats und eines Glycolurilderivats hergestellt sind, das die vier Wasserstoffe der vier Stickstoffatome durch eine Alkyloxyalkylengruppe substituiert aufweist, wobei Alkylen die Bedeutung von Methylen, Ethylen, Isopropylen und Alkyl die Bedeutung von Methyl, Methyl, Isopropyl hat;
und die Mikrokapseln eine Teilchengröße von 1 bis 30 µm aufweisen.

2. Agrochemische Formulierung nach Anspruch 1, **dadurch gekennzeichnet, dass** das Styrol-Acryl-Copolymer anionisch substituiert ist.

3. Sprühgetrocknete agrochemische Formulierung nach Anspruch 1 oder 2, **dadurch gekennzeichnet, dass** die wässrige Suspension sprühgetrocknet 2-20 Gew.-% des Styrol-Acryl-Polymers nach Anspruch 1 oder 2 enthielt, und zusätzlich 0,1-15 Gew.-% eines Sulfosuccinats enthielt.

4. Agrochemische Formulierung nach Anspruch 1 oder 2, **dadurch gekennzeichnet, dass** sie vom Typ eines wasserdispergierbaren Granulats ist, und die Mikrokapseln Fluroxypyr einschließen.

5. Agrochemische Formulierung nach Anspruch 1 oder 2, **dadurch gekennzeichnet, dass** sie vom Typ eines wasserdispergierbaren Granulats ist, und die Mikrokapseln Chlorpyrifos einschließen.

6. Agrochemische Formulierung nach Anspruch 1 oder 2, **dadurch gekennzeichnet, dass** sie vom Typ eines wasserdispergierbaren Granulats ist, und der aktive Bestandteil innerhalb der Mikrokapsel Fluroxypyr ist, und mindestens ein Sulfonylharnstoff sich außerhalb der Mikrokapseln befindet.

7. Agrochemische Formulierung nach Anspruch 1 oder 2, **dadurch gekennzeichnet, dass** sie vom Typ einer Kapselsuspension ist, und die Mikrokapseln Fluroxypyr einschließen.

8. Agrochemische Formulierung nach einem der Ansprüche 1 bis 9, **dadurch gekennzeichnet, dass** die Endformulierung 1 bis 45 % eines anionischen Styrol-Acryl-Polymers enthält, und sie, falls sie ein wasserdispergierbares Konzentrat ist, ein Sulfosuccinat in einer Konzentration von 0,1 bis 15 % enthält, wenn im Feuchtgewicht der Formulierung vor dem Sprühtrocknungsschritt berechnet.

9. Verfahren zur Herstellung einer agrochemischen, wasserdispergierbaren Granulatformulierung, die Fluroxypyr enthält, nach Anspruch 1, **gekennzeichnet durch** die folgenden Schritte:
a) Bereitstellen einer Ölphase bei etwa 75 °C, die das Wand bildende Material nach Anspruch 1 oder 2, den Katalysator und den aktiven Bestandteil enthält;
b) Bereitstellen einer Wasserphase bei etwa 75 °C, die ein anionisches substituiertes Styrol-Acryl-Polymer und einen in Öl löslichen Emulgator enthält;
c) Mischen beider Phasen, kurz danach Zugeben eines Dialkylzinnlaurat-Katalysators und Emulgieren bei hoher Scherspannung;
d) Härtenlassen der Mikrokapseln bei der gleichen Temperatur für etwa 2 Stunden;
f) Zugeben eines anionischen substituierten Styrol-Acryl-Polymers und eines Sulfosuccinats;
g) Sprühtrocknen des Gemischs f) bei einer Temperatur des Produkts unter dem Schmelzpunkt des aktiven Bestandteils Fluroxypyr.

## Revendications

1. Formulation agrochimique contenant des microcapsules, **caractérisée en ce que** le ou les principes actifs sont choisis alternativement parmi les groupes :
(i) du chlorpyrifos se trouvant à l'intérieur des microcapsules,
ou
(ii) du fluroxypyr se trouvant à l'intérieur des microcapsules,
ou
(iii) une combinaison de : (a) fluroxypyr et (b) au moins une sulfonylurée, (a) se trouvant à l'intérieur des microcapsules et (b) se trouvant à l'extérieur des microcapsules ;
ou
(iv) une combinaison de (b) au moins une sulfonylurée et (c) un composé agrochimique dont le point de fusion est inférieur à 110 °C et qui est solide à température ambiante, (c) se trouvant à l'intérieur des microcapsules et (b) se trouvant à l'extérieur des microcapsules ;
et la formulation agrochimique contient un polymère acrylique styrénique à hauteur de 1 à 45 % en poids par rapport au poids total de la formulation ;
et les microcapsules sont préparées par la réaction d'au moins un isocyanate aromatique
et d'un dérivé de glycoluril ayant les quatre atomes d'hydrogène des quatre atomes d'azote substitués par un groupe alkyloxyalkylène, le terme alkylène signifiant un groupe méthylène, éthylène, isopropylène et le terme alkyle, signifiant un groupe méthyle, éthyle, isopropyle ;
et les microcapsules ont une taille de particules de 1 à 30 µm.

2. Formulation agrochimique selon la revendication 1, **caractérisée en ce que** le copolymère acrylique styrénique est anioniquement substitué.

3. Formulation agrochimique séchée par atomisation selon la revendication 1 ou 2, **caractérisée en ce que** la suspension aqueuse séchée par atomisation contient de 2 à 20 % en poids du polymère acrylique styrénique selon la revendication 1 ou 2 et contient en outre de 0,1 à 15 % en poids d'un sulfosuccinate.

4. Formulation agrochimique selon la revendication 1 ou 2, **caractérisée en ce qu'**elle est sous forme de granulés dispersibles dans l'eau et les microcapsules renferment du fluroxypyr.

5. Formulation agrochimique selon la revendication 1 ou 2, **caractérisée en ce qu'**elle est sous forme de granulés dispersibles dans l'eau et les microcapsules renferment du chlorpyrifos.

6. Formulation agrochimique selon la revendication 1 ou 2, **caractérisée en ce qu'**elle est sous forme de granulés dispersibles dans l'eau et le principe actif à l'intérieur de la microcapsule est le fluroxypyr et au moins une sulfonylurée est à l'extérieur des microcapsules.

7. Formulation agrochimique selon la revendication 1 ou 2, **caractérisée en ce qu'**elle est sous forme de suspension pour capsule et les microcapsules renferment du fluroxypyr.

8. Formulation agrochimique selon l'une quelconque des revendications 1 à 9, **caractérisée en ce que** la formulation finale contient de 1 à 45 % d'un polymère acrylique styrénique anionique et, dans le cas où c'est un concentré dispersible dans l'eau, elle contient un sulfosuccinate à une concentration de 0,1 à 15 % lorsqu'elle est calculée en poids humide de la formulation avant l'étape de séchage par atomisation.

9. Procédé de fabrication d'une formulation agrochimique de granulés dispersibles dans l'eau contenant du fluroxypyr selon la revendication 1, **caractérisé en ce que** les étapes consistent à :
a) utiliser une phase huileuse à environ 75 °C contenant le matériau formant une paroi selon la revendication 1 ou 2, le catalyseur et le principe actif ;
b) utiliser une phase aqueuse à environ 75 °C contenant un polymère acrylique styrénique anionique substitué et un émulsifiant soluble dans une huile ;
c) mélanger les deux phases, en ajoutant peu après un catalyseur de laurate de dialkylétain et en émulsionnant avec une forte contrainte de cisaillement ;
d) laisser les microcapsules durcir à la même température pendant environ 2 heures ;
f) ajouter un polymère acrylique styrénique anionique substitué et un sulfosuccinate;
g) sécher par atomisation le mélange f) à une température du produit inférieure au point de fusion du principe actif fluroxypyr.
